# EUROPÄISCHE PATENTSCHRIFT

(11) **EP 1 527 145 B1**
(45) Veröffentlichungstag und Bekanntmachung des Hinweises auf die Patenterteilung: **05.09.2007**
(21) Anmeldenummer: 03792184.8
(22) Anmeldetag: 09.07.2003
(51) Int. Cl.: C09D 201/00, C09D 5/44

(54) **BISMUTVERBINDUNGEN ENTHALTENDE ELEKTROTAUCHLACKE (ETL)**
ELECTROPHORETIC PAINT CONTAINING BISMUTH COMPONENTS
PEINTURES ELECTROPHORETIQUES CONTENANT DES COMPOSES AU BISMUTH

(30) Priorität: 08.08.2002 DE 10236350
(43) Veröffentlichungstag der Anmeldung: 04.05.2005
(73) Patentinhaber: BASF Coatings AG, 48165 Münster (DE)
(72) Erfinder: HARTUNG, Michael, 59590 Geseke (DE); HEIMANN, Ulrich, 48165 Münster (DE); GROSSE-BRINKHAUS, Karl-Heinz, 48301 Nottuln (DE); REUTER, Hardy, 48167 Münster (DE)
(86) Internationale Anmeldenummer: PCT/EP2003/007378
(87) Internationale Veröffentlichungsnummer: WO 2004/018580

(56) Entgegenhaltungen:
- WO-A-93/24578
- DE-C- 4 330 002

## Beschreibung

Die vorliegende Erfindung betrifft neue, Bismutverbindungen enthaltende Elektrotauchlacke (ETL). Außerdem betrifft die vorliegende Erfindung die Herstellung neuer, Bismutverbindungen enthaltender ETL. Des weiteren betrifft die vorliegende Erfindung die Verwendung der neuen, Bismutverbindungen enthaltenden ETL für die Herstellung von Elektrotauchlackierungen.

ETL, die Bismutverbindungen als Katalysatoren enthalten, sind bekannt. Die Bismutverbindungen zeichnen sich neben ihrer hohen Aktivität auch durch eine im Vergleich zu den Zinnverbindungen geringere Toxizität aus.

So sind in DE 25 41 234 salze (Carboxylate) u.a. des Bismuts als Härtungskatalysatoren für Elektrotauchlacke beschrieben.

Aus der EP 0 509 437 sind Elektrotauchlacke, die über blockierte Isocyanatgruppen vernetzen, bekannt, die mindestens ein Dialkylsalz aromatischer Carbonsäuren und mindestens eine Bismut- oder Zirkonverbindung enthalten.

In EP 0 642 558 werden allerdings die für den Einsatz in Elektrotauchlakken möglichen Bismutverbindungen deutlich eingeschränkt, da die leicht verfügbaren Salze längerkettiger Säuren, wie z.B. Bismutoctanoat und Bismutneodekanoat beim Einsatz in kationischen Bindemitteln Störungen durch ölartige Ausscheidungen verursachen. Desweiteren sollen anorganische Bismutverbindungen durch Einmischen in das Bindemittel oder in eine Pigmentpaste nur schlecht verteilbar und in dieser Form nur wenig katalytisch wirksam sein.

Aus der europäischen Patentanmeldung EP 0 690 106 A1 sind wasserlösliche Bismutverbindungen enthaltende Zusammensetzungen bekannt, die als Katalysatoren für die Härtung von ETL geeignet sind. Sie enthalten ein Epoxid-Amin-Addukt in einer solchen Menge, daß das Verhältnis der Anzahl der Bismut-Atome zur Anzahl der beta-Hydroxyamingruppen des Epoxid-Amin-Addukts 1 : 10 bis 10 : 1 beträgt. Die zur Herstellung der Bismutverbindungen verwendete Säure wird in einer solchen Menge eingesetzt, daß auf 1 Mol Bismut zwischen 0,1 und weniger als 2 Mol dissoziierbare Protonen kommen. Als Säure kann unter zahlreichen anderen auch Salicylsäure eingesetzt werden. Nähere Angaben fehlen allerdings; in den Beispielen wird lediglich Dimethylolpropionsäure verwendet.

In dem europäischen Patent EP 0 739 389 wird ein vereinfachtes Verfahren zur Herstellung einer korrosionsschützenden Lackierung mittels Elektrotauchlackierung beschrieben, in dem der Elektrotauchlack Bismutlactat oder Bismutdimethylolpropionat enthält. In der prioritätsbegründenden Schrift DE 43 30 002 werden weitere mögliche Bismutverbindungen u.a. Bismutsalicylat erwähnt, jedoch fehlen hier nähere Angaben, insbesondere werden in den Beispielen nur die Salze der Milchsäure und Dimethylolpropionsäure eingesetzt. Bismutsubsalicylat wird nicht erwähnt.

In DE 100 01 222 wird die Verwendung von kolloidalem Bismut zur Verbesserung des Korrosionsschutzes vorn Elektrotauchlacken erwähnt. Auch hier werden Bismutsalze aliphatischer Carbonsäuren eingesetzt.

Aufgabe der vorliegenden Erfindung ist es, neue Bismutverbindungen enthaltende Elektrotauchlacke (ETL) zu finden, welche die in der EP 0 642 558 beschriebenen Nachteile des Standes der Technik nicht besitzen, sondern eine einfache und stabile Einarbeitung der Bismutverbindungen in den Elektrotauchlack ermöglichen und die hieraus hergestellten Elektrotauchlacke einen guten Verlauf haben, frei von Oberflächenstörungen sind und einen guten Korrosionsschutz gewährleisten.

Demgemäß wurden die neuen, Bismutverbindungen enthaltenden Elektrotauchlacke (ETL) gefunden, enthaltend
(A) mindestens ein selbstvernetzendes und/oder fremdvernetzendes Bindemittel mit (potentiell) kationischen oder anionischen Gruppen und reaktiven funktionellen Gruppen, die
   (i) mit sich selbst oder mit im selbstvernetzenden Bindemittel vorhandenen komplementären reaktiven funktionellen Gruppen oder
   (ii) im Falle des fremdvernetzenden Bindemittels mit in Vernetzungsmitteln (B) vorhandenen komplementären reaktiven funktionellen Gruppen
   thermische Vernetzungsreaktionen eingehen können,
(B) gegebenenfalls mindestens ein Vernetzungsmittel, enthaltend die komplementären reaktiven funktionellen Gruppen, und
(C) wasserunlösliches, pulverförmiges Bismutsubsalicylat der Summenformel C₇H₅O₄Bi.

Im Hinblick auf den Stand der Technik war es überraschend und für den Fachmann nicht vorhersehbar, daß die der Erfindung zugrunde liegende Aufgabe mit Hilfe der erfindungsgemäßen ETL gelöst werden konnte. Ins-besondere war es überraschend, daß die erfindungsgemäßen ETL sich einfach herstellen ließen, lagerstabil waren, eine optimale Teilchengröße der dispergierten Bestandteile aufwiesen und sehr gut filtrierbar waren. Sie ließen sich in einfacher Weise problemlos elektrophoretisch auf elektrisch leitfähigen Substraten abscheiden. Die resultierenden Elektrotauchlackierungen hatten einen guten Verlauf, waren frei von Oberflächenstörungen und Stippen und boten einen hervorragenden Korrosionsschutz und Kantenschutz. In einem besonderen Anwendungsfall können die abgeschiedenen, nicht oder nur partiell gehärteten Schichten der erfindungsgemäßen ETL naß-in-naß mit wäßrigen Beschichtungsstoffen, wie Wasserprimer oder Wasserfüller, störungsfrei überschichtet und danach gemeinsam mit diesen eingebrannt werden.

Die erfindungsgemäßen ETL weisen vorzugsweise einen Festkörpergehalt von 5 bis 50, bevorzugt 5 bis 35, Gew.-% auf. Hierbei ist unter »Festkörper« der Anteil eines ETL zu verstehen, der die hieraus hergestellte Elektrotauchlackierung aufbaut.

Die erfindungsgemäßen ETL enthalten mindestens ein Bindemittel (A).

Die Bindemittel (A) können selbstvernetzend und/oder fremdvernetzend sein.

Selbstvernetzende Bindemittel (A) enthalten reaktive funktionelle Gruppen, die mit sich selbst und/oder mit in den selbstvernetzenden Bindemitteln (A) vorhandenen komplementären reaktiven funktionellen Gruppen thermische Vernetzungsreaktionen eingehen können.

Fremdvernetzende Bindemittel (A) enthalten reaktive funktionelle Gruppen, die mit in Vernetzungsmitteln (B) vorhandenen komplementären reaktiven funktionellen Gruppen thermische Vernetzungsreaktionen eingehen können.

Vorzugsweise wird mindestens ein fremdvernetzendes Bindemittel (A) in Kombination mit mindestens einem Vernetzungsmittel (B) eingesetzt.

Das Bindemittel (A) enthält kationische und/oder potentiell kationische Gruppen. Bindemittel (A) dieser Art werden in kathodisch abscheidbaren Elektrotauchlacken (KTL) eingesetzt.

Beispiele geeigneter potentiell kationischer Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen.

Beispiele geeigneter Neutralisationsmittel für die potentiell kationischen Gruppen sind anorganische und organische Säuren wie Schwefelsäure, Salzsäure, Phosphorsäure, Ameisensäure, Essigsäure, Milchsäure, Dimethylolpropionsäure oder Zitronensäure, insbesondere Ameisensäure, Essigsäure oder Milchsäure.

Beispiele geeigneter Bindemittel (A) für KTL sind aus den Druckschriften EP 0 082 291 A 1, EP 0 234 395 A 1, EP 0 227 975 A 1, EP 0 178 531 A 1, EP 0 333 327, EP 0 310 971 A 1, EP 0 456 270 A 1, US 3,922,253 A, EP 0 261 385 A 1, EP 0 245 786 A 1, EP 0 414 199 A 1, EP 0 476 514 A 1, EP 0 817 684 A 1, EP 0 639 660A 1, EP 0 595 186 A 1, DE 41 26 476 A 1, WO 98/33835, DE 33 00 570 A 1, DE 37 38 220 A 1, DE 35 18 732 A 1 oder DE 196 18 379 A 1 bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze (A) mit Aminzahlen vorzugsweise zwischen 20 und 250 mg KOH/g und einem gewichtsmittleren Molekulargewicht von 300 bis 10.000 Dalton. Insbesondere werden Amino(meth)acrylatharze, Amonoepoxidharze, Aminoepoxidharze mit endständigen Doppelbindungen, Aminoepoxidharze mit primären und/oder sekundären Hydroxylgruppen, Aminopolyurethanharze, aminogruppenhaltige Polybutadienharze oder modifizierte Epoxidharz-Kohlendioxid-Amin-Umsetzungsprodukte verwendet.

Alternativ kann das Bindemittel (A) anionische und/oder potentiell anionische Gruppen enthalten. Bindemittel (A) dieser Art werden in anionisch abscheidbaren Elektrotauchlacken (ATL) eingesetzt.

Beispiele geeigneter potentiell anionischer Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter anionischer Gruppen sind Carboxylat-, Sulfonat- oder Phosphonatgruppen, insbesondere Carboxylatgruppen.

Beispiele für geeignete Neutralisationsmittel für die potentiell anionischen Gruppen sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen.

Beispiele geeigneter Bindemittel (A) für ATL sind aus der deutschen Patentanmeldung DE 28 24 418 A 1 bekannt. Hierbei handelt es sich vorzugsweise um Polyester, Epoxydharzester, Poly(meth)acrylate, Maleinatöle oder Polybutadienöle mit einem gewichtsmittleren Molekulargewicht von 300 bis 10.000 Dalton und einer Säurezahl von 35 bis 300 mg KOH/g.

Im allgemeinen wird die Menge an Neutralisationsmittel wird so gewählt, daß 1 bis 100 Äquivalente, bevorzugt 50 bis 90 Äquivalente der potentiell kationischen oder potentiell anionischen Gruppen eines Bindemittels (A) neutralisiert werden.

Beispiele geeigneter reaktiver funktioneller Gruppen sind Hydroxylgruppen, Thiolgruppen und primäre und sekundäre Aminogruppen, insbesondere Hydroxylgruppen.

Beispiele geeigneter komplementärer reaktiver funktioneller Gruppen sind blockierte Isocyanatgruppen, Hydroxymethylen- und Alkoxymethylengruppen, vorzugsweise Methoxymethylen- und Butoxymethylengruppen und insbesondere Methoxymethylengruppen. Bevorzugt werden blockierte Isocyanatgruppen verwendet. Beispiele geeigneter Blockierungsmittel sind die nachstehend beschriebenen.

Vorzugsweise werden KTL als ETL eingesetzt.

Der Gehalt der erfindungsgemäßen ETL an den vorstehend beschriebenen Bindemitteln (A) richtet sich vor allem nach ihrer Löslichkeit und Dispergierbarkeit im wäßrigen Medium und nach ihrer Funktionalität hinsichtlich der Vernetzungsreaktionen mit sich selbst oder den Bestandteilen (B) und kann daher vom Fachmann aufgrund seines allgemeinen Fachwissens gegebenenfalls unter Zuhilfenahme einfacher Vorversuche leicht festgelegt werden.

Als Vernetzungsmittel (B) kommen alle üblichen und bekannten Vernetzungsmittel in Betracht, die geeignete komplementäre reaktive funktionelle Gruppen enthalten. Vorzugsweise werden die Vernetzungsmittel (B) aus der Gruppe, bestehend aus blockierten Polyisocyanaten, Melamin-Formaldehyd-Harzen, Tris(alkoxycarbonylamino)triazinen und Polyepoxiden, ausgewählt. Bevorzugt werden die Vernetzungsmittel (B) aus der Gruppe, bestehend aus blockierten Polyisocyanaten und hoch reaktiven Melamin-Formaldehyd-Harzen, ausgewählt. Besonders bevorzugt werden die blockierten Polyisocyanate eingesetzt.

Die blockierten Polyisocyanate (B) werden aus üblichen und bekannten Lackpolyisocyanaten mit aliphatisch, cycloaliphatisch, araliphatisch und/oder aromatisch gebundenen Isocyanatgruppen hergestellt.

Bevorzugt werden Lackpolyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Außerdem können die Lackpolyisocyanate in üblicher und bekannter Weise hydrophil oder hydrophob modifiziert sein.

Beispiele für geeignete Lackpolyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Lackpolyisocyanate sind Isocyanurat-, Biuret-, Allophanat-, Iminooxadiazindion-, Urethan-, Harnstoff-, Carbodiimid-und/oder Uretdiongruppen aufweisende Polyisocyanate, die aus üblichen und bekannten Diisocyanaten erhältlich sind. Vorzugsweise werden als Diisocyanate Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, 1,8-Diisocyanato-4-isocyanatomethyl-octan, 1,7-Diisocyanato-4-isocyanatomethyl-heptan, 1-Isocyanato-2-(3-isocyanatopropyl)cyclohexan, 2,4- und/oder 2,6-Toluylendiisocyanat, 4,4'-Diphenylmethandiisocyanat, Naphthalindiisocyanat oder Mischungen aus diesen Polyisocyanaten eingesetzt.

Beispiele für geeignete Blockierungsmittel zur Herstellung der blockierten Polyisocyanate (B) sind
i) Phenole, wie Phenol, Cresol, Xylenol, Nitrophenol, Chlorophenol, Ethylphenol, t-Butylphenol, Hydroxybenzoesäure, Ester dieser Säure oder 2,5-Di-tert.-butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleinimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) Gemische dieser Blockierungsmittel.

Der Gehalt der erfindungsgemäßen ETL an den vorstehend beschriebenen Vernetzungsmitteln (B) richtet sich vor allem nach ihrer Funktionalität hinsichtlich der Vernetzungsreaktionen mit den Bestandteilen (A) und kann daher vom Fachmann aufgrund seines allgemeinen Fachwissens gegebenenfalls unter Zuhilfenahme einfacher Vorversuche leicht festgelegt werden.

Erfindungsgemäß enthalten die erfindungsgemäßen ETL ein wasserunlösliches, pulverförmiges Bismutsubsalicylat (C) der Summenformel C₇H₅O₄Bi. Es hat einen Bismutgehalt nach DAB7 von 56,5 bis 60 Gew.-%. Das Bismutsubsalicylat (C) ist eine handelsübliche Verbindung und wird beispielsweise von der Firma MCP HEK GmbH, Lübeck, vertrieben. Vorzugsweise enthalten die erfindungsgemäßen ETL, bezogen auf ihren Festkörper, 0,05 bis 5, bevorzugt 0,1 bis 4 und insbesondere 0,2 bis 3 Gew.-% Bismutsubsalicylat (C).

Darüber hinaus können die erfindungsgemäßen ETL noch mindestens einen üblichen und bekannten Zusatzstoff (D), ausgewählt aus der Gruppe, bestehend aus von Bismutsubsalicylat (C) verschiedenen Katalysatoren; Pigmenten; Antikrateradditiven; Polyvinylalkoholen; thermisch härtbaren Reaktiwerdünnem; molekulardispers löslichen Farbstoffen; Lichtschutzmitteln, wie UV-Absorbern und reversiblen Radikalfängern (HALS); Antioxidantien; niedrig- und hochsiedenden ("lange") organischen Lösemitteln; Entlüftungsmitteln; Netzmitteln; Emulgatoren; Slipadditiven; Polymerisationsinhibitoren; thermolabilen radikalischen Initiatoren; Haftvermittlern; Verlaufmitteln; filmbildenden Hilfsmitteln; Flammschutzmitteln; Korrosionsinhibitoren; Rieselhilfen; Wachsen; Sikkativen; Bioziden und Mattierungsmitteln, in wirksamen Mengen enthalten.

Weitere Beispiele geeigneter Zusatzstoffe (D) werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Vorzugsweise werden Pigmente als Zusatzstoffe (D) eingesetzt. Vorzugsweise werden die Pigmente (D) aus der Gruppe, bestehend aus üblichen und bekannten farbgebenden, effektgebenden, elektrisch leitfähigen, magnetisch abschirmenden, fluoreszierenden, füllenden und korrosionshemmenden organischen und anorganischen Pigmenten, ausgewählt.

Die erfindungsgemäßen ETL werden durch Vermischen und Homogenisieren der vorstehend beschriebenen Bestandteile (A), (B), (C) und gegebenenfalls (D) mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer hergestellt. Dabei werden die Pigmente vorzugsweise in der Form von Pigmentpasten oder Pigmentpräparationen in die ETL eingearbeitet (vgl. Römpp Lexikon Lacke und Druckfarben, Georg Thieme Verlag, Stuttgart, New York, 1998, »Pigmentpräparationen«, Seite 452). Ein weiterer besonderer Vorteil des erfindungsgemäßen verwendenden Bismutsubsalicylats (C) ist, daß es sich hervorragend in die Pigmentpasten und die erfindungsgemäßen ETL einarbeiten läßt.

Die Applikation der erfindungsgemäßen ETL erfolgt in üblicher und bekannter Weise, indem ein elektrisch leitfähiges Substrat in ein erfindungsgemäßes Elektrotauchlackbad getaucht wird, das Substrat als Kathode oder Anode, vorzugsweise als Kathode, geschaltet wird, durch Gleichstrom eine ETL-Schicht auf dem Substrat abgeschieden wird, das beschichtete Substrat aus dem Elektrotauchlackbad entfernt wird und die abgeschiedene ETL-Schicht in üblicher und bekannter Weise thermisch gehärtet (eingebrannt) wird. Die resultierende Elektrotauchlackierung kann anschließend mit einem Füller oder einer Steinschlagschutzgrundierung und einem Unidecklack oder alternativ mit einem Basislack und einem Klarlack nach dem Naß-in-naß-Verfahren überschichtet werden. Die Füllerschicht oder Schicht aus der Steinschlagschutzgrundierung sowie die Unidecklackschicht werden vorzugsweise jede für sich eingebrannt. Die Basislackschicht und die Klarlackschicht werden vorzugsweise gemeinsam eingebrannt. Es resultieren Mehrschichtlackierungen mit hervorragenden anwendungstechnischen Eigenschaften

Alternativ können die Mehrschichtlackierungen nach Naß-in-naß-Verfahren hergestellt werden, bei denen die abgeschiedene ETL-Schicht nicht oder nur partiell thermisch gehärtet und gleich mit den weiteren Beschichtungsstoffen, insbesondere wäßrigen Beschichtungsstoffen, überschichtet wird, wonach sie mit mindestens einer der Schichten aus den Beschichtungsstoffen (ETL-Schicht + Füllerschicht; ETL-Schicht + Füllerschicht + Unidecklackschicht; ETL-Schicht + Füller-Schicht + Basislackschicht oder ETL-Schicht + Füller-Schicht + Basislackschicht + Klarlackschicht) gemeinsam eingebrannt wird. Auch hierbei resultieren Mehrschichtlackierungen mit hervorragenden anwendungstechnischen Eigenschaften, wobei die Herstellverfahren besonders wirtschaftlich und energiesparend sind. Dabei zeigt es sich, daß sich die erfindungsgemäßen ETL-Schichten besonders gut störungsfrei naß-in-naß überschichten lassen.

In allen Fällen werden erfindungsgemäße Elektrotauchlackierungen erhalten, die einen sehr guten Verlauf zeigen, frei von Oberflächenstörungen und Stippen sind und einen hervorragenden Korrosionsschutz und Kantenschutz bieten.

### Beispiele

### Herstellbeispiel 1

### Die Herstellung eines Vernetzungsmittels für einen KTL

In einem Reaktor werden 10.462 Teile Isomere und höherfunktionelle Oligomere auf Basis von 4,4'-Diphenylmethandiisocyanat mit einem NCO-Equivalentgewicht von 135 g/equ (Lupranat® M20S der Fa. BASF AG; NCO-Funktionalität ca. 2,7; Gehalt an 2,2'- und 2,4'-Diphenylmethandiisocyanat unter 5%) unter Stickstoffatmosphäre vorgelegt. Man gibt 20 Teile Dibutylzinndilaurat zu und tropft 9626 Teile Butyldiglykol so zu, daß die Produkttemperatur unter 60°C bleibt. Nach Ende der Zugabe wird die Temperatur weitere 60 Minuten bei 60°C gehalten und ein NCO-Equivalentgewicht von 1.120 g/equ bestimmt (bezogen auf Festanteile). Nach Anlösung in 7.737 Teilen Methylisobutylketon und Zugabe von 24 Teilen Dibutylzinndilaurat werden 867 Teile geschmolzenes Trimethylolpropan so zugegeben, daß eine Produkttemperatur von 100°C nicht überschritten wird. Nach Zugabeende läßt man weitere 60 Minuten nachreagieren. Man kühlt auf 65°C ab und verdünnt gleichzeitig mit 963 Teilen n-Butanol und 300 Teilen Methylisobutylketon. Der Feststoffgehalt liegt bei 70,1% (1 Std. bei 130°C).

### Herstellbeispiel 2

### Die Herstellung eines Vorprodukts der Aminkomponente für ein KTL-Bindemittel

Aus einer 70%-igen Lösung von Diethylentriamin in Methylisobutylketon wird bei 110 bis 140°C das Reaktionswasser entfernt. Anschließend wird mit Methylisobutylketon verdünnt bis die Lösung ein Aminequivalentgewicht von 131 g/equ aufweist.

### Herstellbeispiel 3

### Die Herstellung einer wäßrigen Dispersion, enthaltend ein Bindemittel und das Vernetzungsmittel aus Herstellbeispiel 1

In einem Reaktor werden 5.797 Teile Epoxidharz auf Basis von Bisphenol A mit einem Epoxy-Equivalentgewicht (EEW) von 188 g/equ zusammen mit 1.320 Teilen Bisphenol A, 316 Teilen Dodecylphenol, 391 Teilen p-Kresol und 413 Teilen Xylol unter Stickstoffatmosphäre auf 125°C aufgeheizt und 10 Minuten gerührt. Anschließend heizt man auf 130°C und gibt 22 Teile N,N-Dimethylbenzylamin zu. Bei dieser Temperatur wird der Reaktionsansatz gehalten, bis das EEW einen Wert von 814 g/equ erreicht hat.

Man gibt nun 7.810 Teile des Vernetzungsmittels gemäß dem Herstellbeispiel 1 hinzu und hält bei 100°C. Eine halbe Stunde nach Vernetzerzugabe werden 198 Teile Butylglykol und 1.002 Teile sec-Butanol zugesetzt. Unmittelbar anschließend wird eine Mischung von 481 Teilen des Vorprodukts gemäß Beispiel 2 und 490 Teilen Methylethanolamin in den Reaktor gegeben und der Ansatz auf 100°C temperiert. Nach einer weiteren halben Stunde erhöht man die Temperatur auf 105°C und gibt 150 Teile N,N-Dimethylaminopropylamin zu.

45 Minuten nach Aminzugabe setzt man 879 Teile Plastilit^{®} 3060 (Propylenglykolverbindung, Fa. BASF) und 45 Teile eines üblichen Additivs zu, verdünnt mit einem Gemisch von 490 Teilen Propylenglykolphenylether und 196 Teilen sec-Butanol, und kühlt auf 95°C ab.

Nach 10 Minuten werden 14.930 Teile des Reaktionsgemischs in ein Dispergiergefäß überführt. Dort gibt man unter Rühren 455 Teile Milchsäure (88%-ig in Wasser), gelöst in 6.993 Teilen Wasser zu. Anschließend wird 20 Minuten homogenisiert, bevor mit weiteren 12.600 Teilen Wasser weiter verdünnt wird.

Durch Destillation im Vakuum werden die flüchtigen Lösemittel entfernt und anschließend mengengleich durch Wasser ersetzt.

Die Dispersion besitzt folgende Kennzahlen:

| | |
|---|---|
| Feststoffgehalt: | 31,9% (1 Stunde bei 130°C) |
| Basengehalt: | 0,69 mequ/g Festkörper |
| Säuregehalt: | 0,32 mequ/g Festkörper |
| pH: | 6,2 |
| Teilchengröße: | 113 nm |

### Herstellbeispiel 4

### Die Herstellung einer wäßrigen Lösung eines Reibharzes

### Herstellbeispiel 4.1

### Die Herstellung einer Epoxid-Amin-Addukt-Lösung

Gemäß der internationalen Patentanmeldung WO 91/09917, Beispiel 1.3, Reibharz A3, wird eine organisch-wäßrige Lösung eines Epoxid-Amin-Addukts hergestellt, indem man in einer ersten Stufe 2.598 Teile Bisphenol-A-diglycidylether (Epoxy-Equivalentgewicht (EEW): 188 g/equ), 787 Teile Bisphenol-A, 603 Teile Dodecylphenol und 206 Teile Butylglykol in Gegenwart von 4 Teilen Triphenylphosphin bei 130°C bis zu einem EEW von 865 g/equ reagieren läßt. Während des Abkühlens wird mit 849 Teilen Butylglykol und 1.534 Teilen D.E.R. 732 (Polypropylenglykoldiglycidylether der Fa. DOW Chemical) verdünnt und bei 90°C mit 266 Teilen 2,2'-Aminoethoxyethanol und 212 Teilen N,N-Dimethylaminopropylamin weiterreagiert. Nach 2 Stunden ist die Viskosität der Harzlösung konstant (5,3 dPas; 40%-ig in Solvenon^{®} PM (Methoxypropanol der Fa. BASF AG); Platte-Kegel-Viskosimeter bei 23°C). Man verdünnt mit 1.512 Teilen Butylglykol und teilneutralisiert die Basengruppen mit 201 Teilen Eisessig, verdünnt weiter mit 1.228 Teilen entionisiertem Wasser und trägt aus. Man erhält so eine 60%-ige wäßrig-organische Harzlösung, deren 10%-ige Verdünnung einen pH von 6,0 aufweist.

Die Epoxid-Amin-Addukt-Lösung wird im folgenden zur Herstellung einer wäßrigen Lösung und/oder Dispersion eines Reibharzes eingesetzt.

### Beispiel 1

### Die Herstellung einer Pigmentpaste, enthaltend Bismutsubsalicylat

Es werden zunächst 28.000 Teile Wasser und 25.000 Teile der in Herstellbeispiel 4.1 beschriebenen Harzlösung vorgemischt. Dann werden 500 Teile Ruß, 6.700 Teile Extender ASP 200, 37.300 Teile Titandioxid (TI-PURE® 900, DuPont) und 2.500 Teile Bismutsubsalicylat vorgemischt und einer Rührwerksmühle vom Typ ZKW zugeführt. Die Mischung wird in Kreisfahrweise solange dispergiert, bis eine Hegman-Feinheit von 12 µm erreicht ist.

Es wird eine stabile Pigmentpaste erhalten, die auch nach zweimonatiger Lagerung bei 40°C nicht sedimentiert.

### Beispiel 2

### Die Herstellung eines erfindungsgemäßen KTL und einer erfindungsgemäßen Elektrotauchlackierung

Es wird ein Elektrotauchlackbad aus 2053 Gewichtsteilen deionisierten Wassers, 2348 Gewichtsteile der Dispersion des Herstellbeispiels 3 und 599 Gewichtsteile der Pigmentpaste des Beispiels 1 hergestellt. Der so erhaltene Elektrotauchlack hat einen Festkörperanteil von ca. 20% mit einem Aschegehalt von 25%. Die Teilchengröße der dispergierten Bestandteile ist dem Verwendungszweck optimal angepasst. Der Elektrotauchlack ist sehr gut filtrierbar und von hoher Resistenz gegenüber dem Befall durch Mikroorganismen.

Nach Abscheidung bei 300-330 V bei einer Badtemperatur von 30°C und Einbrennen (15 min.; Objekttemperatur 175°C) werden auf nicht passivierend gespülten, phosphatierten Stahltafeln (BO 26 W 42 OC, Chemetall) glatte Filme mit einer Schichtdicke von 20-22 mm erhalten. Oberflächenstörungen und Stippen sind nicht zu beobachten. Korrosionsschutz und Kantenschutz sind hervorragend [Klimawechseltest: Unterwanderung am Ritz (10 Zyklen): 1,2 mm; Kantenrost Note: 1 bis 2 (1 = beste Note, 5 = schlechteste Note)].

## Patentansprüche

1. Bismutverbindungen enthaltende Elektrotauchlacke (ETL), enthaltend
(A) mindestens ein selbstvernetzendes und/oder fremdvernetzendes Bindemittel mit (potentiell) kationischen oder anionischen Gruppen und reaktiven funktionellen Gruppen, die
(i) mit sich selbst oder mit im selbstvernetzenden Bindemittel vorhandenen komplementären reaktiven funktionellen Gruppen oder
(ii) im Falle des fremdvernetzenden Bindemittels mit in Vernetzungsmitteln (B) vorhandenen komplementären reaktiven funktionellen Gruppen
thermische Vernetzungsreaktionen eingehen können,
(B) gegebenenfalls mindestens ein Vernetzungsmittel, enthaltend die komplementären reaktiven funktionellen Gruppen, und
(C) Bismutsubsalicylat der Summenformel C₇H₅O₄Bi.

2. ETL nach Anspruch 1, **dadurch gekennzeichnet, daß** das Bismutsubsalicylat (C) wasserunlöslich und/oder pulverförmig ist.

3. ETL nach einem der Ansprüche 1 oder 2, **dadurch gekennzeichnet, daß** das Bismutsubsalicylat (C) einen Bismutgehalt von 56,5 bis 60 Gew.-% hat.

4. ETL nach einem der Ansprüche 1 bis 3, **dadurch gekennzeichnet, daß** sie, bezogen auf seinen Festkörper, 0,05 bis 5 Gew.-% Bismutsubsalicylat (C) enthalten.

5. ETL nach einem der Ansprüche 1 bis 4, **dadurch gekennzeichnet, daß** das Bindemittel (A) (potentieil) kationische Gruppen enthält.

6. ETL nach einem der Ansprüche 1 bis 5, **dadurch gekennzeichnet, daß** die reaktiven funktionellen Gruppen Hydroxylgruppen sind.

7. ETL nach einem der Ansprüche 1 bis 6, **dadurch gekennzeichnet, daß** die komplementären reaktiven funktionellen Gruppen blockierte Isocyanatgruppen sind.

8. ETL nach einem der Ansprüche 1 bis 7, **dadurch gekennzeichnet, daß** die Vernetzungsmittel (B) blockierte Polyisocyanate sind.

9. ETL nach einem der Ansprüche 1 bis 8, **dadurch gekennzeichnet, daß** sie mindestens einen Zusatzstoff (D) enthalten.

10. ETL nach Anspruch 9, **dadurch gekennzeichnet, daß** der Zusatzstoff (D) ein Pigment ist.

11. ETL nach Anspruch 10, **dadurch gekennzeichnet, daß** die Pigmente (D) aus der Gruppe, bestehend aus farbgebenden, effektgebenden, elektrisch leitfähigen, magnetisch abschirmenden, fluoreszierenden, füllenden und korrosionshemmenden organischen und anorganischen Pigmenten, ausgewählt werden.

12. Verwendung der ETL gemäß einem der Ansprüche 1 bis 11 zur Herstellung von Elektrotauchlackierungen und/oder Mehrschichtlackierungen nach Naß-in-naß-Verfahren.

## Claims

1. Electrocoat materials comprising bismuth compounds, further comprising
(A) at least one self-crosslinking and/or externally crosslinking binder containing (potentially) cationic or anionic groups and reactive functional groups which
(i) with themselves or with complementary reactive functional groups in the self-crosslinking binder, or
(ii) in the case of the externally crosslinking binder, with complementary reactive functional groups present in crosslinking agents (B)
are able to undergo thermal crosslinking reactions,
(B) if desired, at least one crosslinking agent comprising the complementary reactive functional groups, and
(C) bismuth subsalicylate of empirical formula C₇H₅O₄Bi.

2. Materials according to Claim 1, **characterized in that** the bismuth subsalicylate (C) is water-insoluble and/or pulverulent.

3. Materials according to either of Claims 1 or 2, **characterized in that** the bismuth subsalicylate (C) has a bismuth content of from 56.5 to 60% by weight.

4. Materials according to any of Claims 1 to 3, **characterized in that** they comprise, based on their solids, from 0.05 to 5% by weight of bismuth subsalicylate (C).

5. Materials according to any of Claims 1 to 4, **characterized in that** the binder (A) contains (potentially) cationic groups.

6. Materials according to any of Claims 1 to 5, **characterized in that** the reactive functional groups are hydroxyl groups.

7. Materials according to any of Claims 1 to 6, **characterized in that** the complementary reactive functional groups are blocked isocyanate groups.

8. Materials according to any of Claims 1 to 7, **characterized in that** the crosslinking agents (B) are blocked polyisocyanates.

9. Materials according to any of Claims 1 to 8, **characterized in that** they comprise at least one additive (D).

10. Materials according to Claim 9, **characterized in that** the additive (D) is a pigment.

11. Materials according to Claim 10, **characterized in that** the pigments (D) are selected from the group consisting of color pigments, effect pigments, electrically conductive pigments, magnetically shielding pigments, fluorescent pigments, extender pigments, and anticorrosion pigments, organic and inorganic.

12. Use of electrocoat materials according to any of Claims 1 to 11 for producing electrocoats and/or multicoat paint systems by wet-on-wet techniques.

## Revendications

1. Peintures électrophorétiques contenant des composés de bismuth, comprenant :
(A) au moins un liant autoréticulant et/ou réticulant avec un agent externe, contenant des groupes (potentiellement) cationiques ou anioniques et des groupes fonctionnels réactifs capables de prendre part à des réactions de réticulation thermiques
(i) avec eux-mêmes ou avec des groupes fonctionnels réactifs complémentaires présents dans le liant autoréticulant, ou
(ii) dans le cas du liant réticulant avec un agent externe, avec des groupes fonctionnels réactifs complémentaires présents dans les agents de réticulation (B),
(B) le cas échéant au moins un agent de réticulation contenant les groupes fonctionnels réactifs complémentaires, et
(C) du subsalicylate de bismuth de formule brute C₇H₅O₄Bi.

2. Peintures électrophorétiques selon la revendication 1, **caractérisées en ce que** le subsalicylate de bismuth (C) est insoluble dans l'eau et/ou pulvérulent.

3. Peintures électrophorétiques selon la revendication 1 ou la revendication 2, **caractérisées en ce que** le subsalicylate de bismuth (C) a une teneur en bismuth allant de 56,5 à 60% en poids.

4. Peintures électrophorétiques selon l'une des revendications 1 à 3, **caractérisées en ce qu'**elles contiennent de 0,05 à 5% en poids de subsalicylate de bismuth (C), ramené à son solide.

5. Peintures électrophorétiques selon l'une des revendications 1 à 4, **caractérisées en ce que** le liant (A) contient des groupes (potentiellement) cationiques.

6. Peintures électrophorétiques selon l'une des revendications 1 à 5, **caractérisées en ce que** les groupes fonctionnels réactifs sont des groupes hydroxyle.

7. Peintures électrophorétiques selon l'une des revendications 1 à 6, **caractérisées en ce que** les groupes fonctionnels réactifs complémentaires sont des groupes isocyanate bloqués.

8. Peintures électrophorétiques selon l'une des revendications 1 à 7, **caractérisées en ce que** les agents de réticulation (B) sont des polyisocyanates bloqués.

9. Peintures électrophorétiques selon l'une des revendications 1 à 8, **caractérisées en ce qu'**elles contiennent au moins une substance ajoutée (D).

10. Peintures électrophorétiques selon la revendication 9, **caractérisées en ce que** la substance ajoutée (D) est un pigment.

11. Peintures électrophorétiques selon la revendication 10, **caractérisées en ce que** les pigments (D) sont choisis dans le groupe comprenant des pigments organiques et inorganiques colorés, à effet, électriquement conducteurs, de blindage magnétique, fluorescents, de charge et inhibant la corrosion.

12. Utilisation des peintures électrophorétiques selon l'une des revendications 1 à 11 pour produire des revêtements peints par électrophorèse par immersion et/ou des revêtements peints multicouches suivant des procédés humide sur humide.
